(19) Europäisches Patentamt
European Patent Office
Office européen des brevets

(11) EP 0 933 124 A1

(12) **DEMANDE DE BREVET EUROPEEN**

(43) Date de publication:
**04.08.1999 Bulletin 1999/31**

(21) Numéro de dépôt: **99400165.9**

(22) Date de dépôt: **25.01.1999**

(51) Int Cl.$^6$: **B01J 13/00**, F16L 59/02, E21B 36/00, E21B 37/06, E21B 43/25

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **29.01.1998 FR 9801009**

(71) Demandeur: **Elf Exploration Production**
**92400 Courbevoie (FR)**

(72) Inventeur: **Joubert, Philippe**
**69005 Lyon (FR)**

(74) Mandataire: **Timoney, Ian Charles Craig**
**Elf Exploration Production**
**Département Propriété Industrielle**
**Tour Elf**
**EP/T/RD/DPI - Bureau 34 G 47**
**92078 Paris La Défense Cedex (FR)**

(54) **Procédé de préparation d'un mélange injectable et gélifiable in situ dans un espace confiné**

(57) Procédé de préparation d'un mélange injectable et gélifiable in situ dans un espace confiné à partir d'un précurseur à gélifier, d'un solvant de dilution et d'un catalyseur de gélification, comprenant une première étape dans laquelle le solvant de dilution et le catalyseur de gélification sont mélangés ensemble, et une deuxième étape dans laquelle le mélange résultant est mélangé avec le précurseur à gélifier, le mélange produit étant injecté dans l'espace confiné. Selon l'invention on effectue chacune des première et deuxième étapes dans un mélangeur statique. Une installation permettant la mise en oeuvre du procédé est également décrite.

EP 0 933 124 A1

## Description

La présente invention se rapporte à un procédé de préparation d'un mélange injectable et gélifiable in situ dans un espace confiné, et, plus particulièrement, d'un tel mélange destiné à être mis en place autour d'un conduit dans un espace confiné, par exemple un puits pétrolier, afin d'assurer une isolation thermique ou acoustique du conduit. L'invention concerne également une installation permettant la mise en oeuvre du procédé.

Lors de la mise en production d'un gisement pétrolier, des hydrocarbures s'écoulent dans un conduit, appelé colonne de production, depuis le fond du puits jusqu'à la surface. Au fond du puits, la pression et la température sont relativement élevées, par exemple 100°C et 300 bars. Lors de la remontée des hydrocarbures vers la surface, ces pression et température décroissent avec, comme résultat que la température en sortie du puits est par exemple de l'ordre de 30°C.

Cette baisse de température des hydrocarbures dans la colonne de production a pour effet d'accroître la viscosité et le poids de ces hydrocarbures, ce qui peut entraîner un ralentissement de leur écoulement. De plus, la baisse de température peut parfois provoquer le dépôt, sur la paroi de la colonne, d'hydrates de paraffines ou de vésicules de liquide, par exemple de l'eau. S'il s'accumule dans le conduit, ce dépôt peut provoquer de graves problèmes d'exploitation tels que le ralentissement des hydrocarbures, voire l'obstruction totale du conduit. Généralement, s'il veut éviter ces risques, l'exploitant est obligé de traiter ce phénomène de dépôt, soit en prévention par injection de produit chimique inhibant le dépôt, soit en curatif en raclant ou grattant le conduit avec des équipements spéciaux ou encore en le réchauffant par un moyen éventuellement disponible. Dans tous les cas, ces opérations constituent une dépense d'argent importante. Ce type de problème se présente également dans les conduits qui relient une tête de puits à un centre de traitement éloigné.

La nécessité que l'effluent reste froid peut aussi se présenter, quand par exemple, on injecte de l'eau depuis la surface en direction du gisement. On a parfois intérêt à ce que l'eau ne soit pas réchauffée par les terrains extérieurs durant ce parcours, par exemple pour maintenir son poids ou provoquer certains phénomènes thermiques favorables à l'injectivité dans le gisement (fragilisation de la roche par le froid en vue de sa fracturation thermique). Dans ce cas, l'isolation thermique du conduit permet un gain de temps sur l'occurrence du phénomène thermique ainsi qu'un meilleur maintien lors d'arrêts ou encore de protéger, autour du conduit, l'ensemble de l'ouvrage qui peut être sensible aux variations thermiques (contraction du cuvelage, fracture des cimentations, etc.)

Certains puits sont situés dans des régions où la température du sol est très basse. Il a déjà été proposé d'équiper la colonne de production d'un chauffage électrique afin de maintenir la température des effluents. Cependant, la réalisation, la mise en oeuvre et la consommation énergétique de ce type d'installation sont très coûteuses, ce qui limite sensiblement son utilisation.

La mise en place d'une isolation thermique autour d'un conduit ou d'une colonne de production, éventuellement couplée à un système de chauffage électrique ou autre, permet de maintenir à une valeur élevée la température des effluents lors de leur trajet, réduisant ainsi les dépôts sur la paroi de la colonne et autres problèmes associés à la température. Par ailleurs l'isolation acoustique intéresse surtout les conduits qui sont à proximité des milieux vivants : conduits aériens et sous-marins ou réseaux de conduits enfouis dans le sol. Par exemple, lors de fortes vitesses d'écoulement avec plus ou moins de gaz, les conduits et leurs singularités tels que coudes, tés, vannes, etc... génèrent des niveaux sonores nuisibles pour l'homme et l'environnement. Bien que peu pratiquée actuellement, l'isolation acoustique contribue au confort de l'homme, à la sécurité du travail et à la protection de l'environnement.

Le document FR-A-2741 420 décrit un système d'isolation thermique ou acoustique d'un conduit, destiné par exemple, à améliorer l'écoulement d'hydrocarbures provenant d'un gisement pétrolier, qui consiste en un manchon d'aérogel entourant le conduit sur au moins une partie de sa longueur. Ce document décrit également un précédé de mise en place d'un manchon d'aérogel autour d'un conduit comprenant les étapes de :

- formation d'un gel liquide à partir d'un précurseur et d'un liquide,
- remplacement éventuel de la phase liquide par un solvant plus volatil, dans le but de faciliter l'étape de séchage, et
- élimination du solvant contenu dans le gel afin de former un aérogel.

Le procédé décrit dans le document FR-A-2741-420 ne permet pas d'assurer parfaitement la formation du gel liquide à partir de ses précurseurs.

Le document US 4.438.072 décrit un procédé de préparation de gels de polyuréthanne qui met en oeuvre un mélangeur statique unique pour assurer un mélange homogène du gel et réduire le risque de bouchage de l'installation.

La température dans un puits pétrolier évolue en fonction de sa profondeur. Aussi, lorsque l'on cherche à faire gélifier un mélange dans l'espace annulaire d'un puits, il faut pouvoir modifier la composition en fonction des conditions de gélification du mélange à chaque profondeur dans le puits. Cela nécessite d'injecter des mélanges à gélifier dont la composition peut être continuellement variée en fonction de la profondeur de l'endroit de l'espace annulaire qui est en train d'être

rempli.

Les procédés décrits dans les documents cités ci-avant ne permettent pas de faire varier rapidement et simplement la composition du mélange à gélifier.

La présente invention a, donc, pour objet un procédé de préparation d'un mélange injectable et gélifiable in situ dans un espace confiné qui est simple et efficace et qui assure que la composition du mélange puisse être adaptée en fonction des conditions de température régnant dans l'espace.

Pour répondre à cet objet, l'invention propose un procédé de préparation d'un mélange injectable et gélifiable in situ dans un espace confiné à partir d'un précurseur à gélifier, d'un solvant de dilution et d'un catalyseur de gélification, comprenant une première étape dans laquelle le solvant de dilution et le catalyseur de gélification sont mélangés ensemble, et une deuxième étape dans laquelle le mélange résultant est mélangé avec le précurseur à gélifier, le mélange produit étant injecté dans l'espace confiné caractérisé en ce que l'on effectue chacune des première et deuxième étapes dans un mélangeur statique.

L'utilisation de deux mélangeurs statiques assurent que la composition du mélange puisse être rapidement variée et, de plus, évite tout risque de gélification prématurée dans l'installation.

La présente invention a également pour objet une installation permettant la mise en oeuvre de ce procédé .

Aussi, l'invention propose une installation permettant la mise en oeuvre du procédé selon l'invention comprenant trois bacs destinés à contenir respectivement le précurseur à gélifier, le solvant de dilution et le catalyseur de gélification, le bac destiné à contenir le précurseur à gélifier étant relié à un premier mélangeur statique, les bacs destinés à contenir le solvant de dilution et le catalyseur de gélification étant reliés ensemble à un deuxième mélangeur statique, la sortie de ce deuxième mélangeur statique étant reliée à l'entrée du premier mélangeur statique.

Les caractéristiques et avantages de la présente invention apparaîtront plus clairement à la lecture de la description suivante, faite en relation aux dessins annexés, sur lesquels la figure unique est une vus schématique d'une installation permettant la mise en oeuvre du procédé de préparation d'un gel selon l'invention.

Comme représentée sur la figure, une installation destinée à permettre la préparation d'un gel comprend trois bacs de stockage 10, 12, 14, essentiellement similaires, à chacun desquels est associée une pompe 16, 18, 20, ou, dans un mode de réalisation préféré, une paire de pompes afin d'assurer la sécurité de l'exploitation. Le premier bac 10, destiné à contenir le précurseur à gélifier, qui, de préférence est précurseur organométallique, est relié par la pompe 16 à un premier mélangeur statique 22. Le deuxième bac 12, destiné à recevoir un solvant de dilution, est relié par la pompe 18 à un deuxième mélangeur statique 24. La sortie du troisième bac 14, qui est destiné à contenir le catalyseur de gélification, est reliée, par la pompe 20, au deuxième mélangeur statique 24. La sortie 26 de ce deuxième mélangeur statique communique avec une des entrées du premier mélangeur 22. Cette installation permet de faire varier indépendamment les débits d'alimentation des trois produits. Le mélange final sortant du premier mélangeur statique par la sortie 28 peut alors avoir une concentration quasiment constante en précurseur organométallique, tout en ayant une concentration en catalyseur ajustée à la valeur souhaitée.

La sortie 28 du premier mélangeur statique est reliée, dans l'exemple illustré, à l'espace annulaire 30 défini dans un puits pétrolier 32, entre la paroi 34 du puits et un tubage de production 36 par lequel des hydrocarbures remontent d'un réservoir (non-représenté) vers la surface dans le sens de la flèche 38.

Les précurseurs utilisés sont constitués par des alcoolates ou alkoxydes de formule générale M (OR)n avec M = Si, Al, Ta, Ti, Zr. On peut utiliser avantageusement selon l'invention des précurseurs prépolymérisés d'alkoxydes. Dans le cas du silicium, et de manière connue les composés sont du type éthoxy, formés par des chaînes plus ou moins longues de ponts siloxanes -Si-O-Si et contenant différents pourcentages de silice, ils répondent à la formule brute suivante :

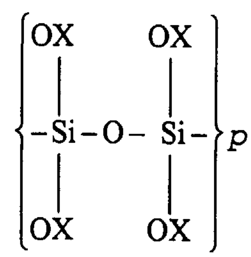

ou X = R et peut être un groupement aliphatique ou Si-0, p étant supérieur à 10.

Le solvant de dilution peut être choisi parmi les alcools ROH, les cétones

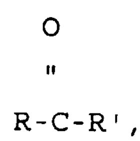

les esters

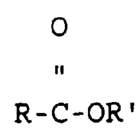

ou les céto-ester

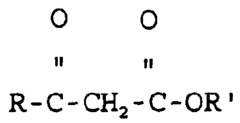

avec R = groupement en $C_1$ à $C_6$ ou parmi leurs mélanges.

Les catalyseurs de gélification sont des solutions aqueuses d'acide ($HF, H_2SO_4, HCl, HBF_4 HNO_3$, R-COOH), ou de base ($NaOH, KOH, NH_4OH$, les amines) ou des sels ($NaF, KF, NH_4F$, R-COO - $NH_4$).

Exemple 1

Dans cet exemple, le volume confiné à remplir est constitué par un espace annulaire composé par un tube externe de diamètre intérieur 168 mm lui-même contenant un tube de diamètre externe de 80 mm le tout ayant 18 mètres de longueur.

Le précurseur utilisé est un polyéthoxysilane HYDROSIL® de la société PCAS, renfermant l'équivalent de 28 % masse de $SiO_2$ stocké dans le réservoir 10. Le solvant de dilution contenu dans le bac 12 est de l'éthanol à 98 %, tandis que le bas 14 renferme une solution aqueuse d'acide fluorhydrique à 48 % masse.

Le mélangeur statique 24 est alimenté d'une part en éthanol à partir du bac 12, au moyen de la pompe 18 débitant 300 l/h et d'autre part en catalyseur à partir du bac 14, au moyen d'une pompe volumétrique délivrant 5.2 l/h d'acide fluorhydrique. Le temps de séjour est alors de 3 secondes. Le mélange sortant par 26 du mélangeur statique 24 est introduit dans le mélangeur statique 22 de même dimension que le mélangeur 24 ; également alimenté par la pompe 16 à raison de 300 l/h de précurseur organométallique HYDROSYL®. Le temps de séjour dans le mélangeur statique 22 est de 1.5 secondes. Le mélange liquide sortant du mélangeur statique 22 est introduit dans l'espace annulaire.

L'essai a duré au total 39 minutes et 30 secondes. Cependant, au bout de 38 minutes et 30 secondes on a interrompu les alimentations en catalyseur et en précurseur de manière à effectuer un rinçage des deux mélangeurs statiques.

Exemple 2

Cet exemple fait état d'un essai industriel sur un puits à gaz. Les caractéristiques du puits sont les suivantes :

- diamètre intérieur du casing = 6"5/8 (168.3 mm)
- diamètre extérieur du tubing de production = 3"5 (88.9mm)
- longueur de l'annulaire = 1 950 m
- volume de l'annulaire = 31.27 $m^3$

Le précurseur utilisé est identique à celui utilisé dans l'exemple 1 : HYDROSYL® à 28 % $SiO_2$.

Le solvant de dilution est de l'éthanol.

La solution catalytique est constituée par une solution aqueuse à 48 % HF.

Du fait de la présence d'un gradient géothermique dans le puits, la quantité de catalyseur ajoutée doit varier en permanence en fonction du niveau de remplissage de l'espace annulaire. Les quantités d'acide fluorhydrique ajoutées dépendent du niveau de température qui sera atteint et également du temps de gélification souhaité. Dans le cas de la gélification de l'HYDROSYL® catalysé par l'acide fluorhydrique la concentration en HF exprimé en mole/l de mélange final répond à l'équation mathématique suivante, quand V précurseur/ V éthanol est sensiblement égal à 1:

$$[HF] = \mathrm{Exp}\,[(\mathrm{Ln}(1/t/_{gel})-2.02)/(-0.02*\phi+4.79)]$$

[HF]= mole/l mélange
$t_{gel}$ = temps de gélification commençante (min)
$\phi$ = température en °C

Dans le présent exemple, les conditions opératoires sont les suivantes :

- débit précurseur Hydrosyl = 10 $m^3$/h
- débit solvant de dilution = 20 $m^3$/h éthanol
- débit en HF aqueux 48 % = variable de 126 à 315 kg/h (109 à 271 l/h).

Les temps de séjour dans les mélangeurs statiques 22 et 24 selon l'invention étant respectivement de 0.8 et 1.2 secondes, les mélangeurs statiques étant identiques.

La durée totale du remplissage est de 1 heure environ. Une minute avant la fin du remplissage, on a interrompu successivement le pompage du précurseur et celui du catalyseur, tout en maintenant temporairement l'alimentation en solvant de dilution ; ce afin d'effectuer le rinçage des mélangeurs.

Afin de réduire le transfert de chaleur du puits par rayonnement infra rouge, on peut ajouter un remplisseur au mélange lors de sa production. Par exemple, on peut disperser dans le bac de stockage 10 ou 12 un solide granulaire ou pulvérulent. Ce solide comprend avantageusement du noir de carbone, du noir de fumée ou du noir de lampe.

## Revendications

1. Procédé de préparation d'un mélange injectable et gélifiable in situ dans un espace confiné à partir d'un précurseur à gélifier, d'un solvant de dilution et d'un catalyseur de gélification, comprenant une première étape dans laquelle le solvant de dilution et le catalyseur de gélification sont mélangés ensemble,

et une deuxième étape dans laquelle le mélange résultant est mélangé avec le précurseur à gélifier, le mélange produit étant injecté dans l'espace confiné caractérisé en ce que l'on effectue chacune des première et deuxième étapes dans un mélangeur statique.

**2.** Procédé selon la revendication 1 caractérisé en ce que l'on utilise comme précurseur à gélifier un composé organométallique.

**3.** Procédé selon la revendication 2 caractérisé en ce que le composé organométallique répond à la formule générale $M(OR)_n$, où M est choisi dans le groupe formé de Si, Al, Ta, Ti et Zr, R représente une chaîne aliphatique en $C_1$ à $C_6$ et n désigne la valence de M.

**4.** Procédé selon la revendication 2 caractérisé en ce que le précurseur organométallique est partiellement polymérisé de formule générale :

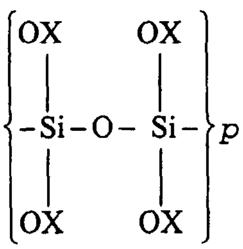

et préférentiellement du type polyéthoxydisiloxane, p étant supérieur à 10,et représentant le nombre de motifs récurrents dans le polymère, et X étant un groupement en $C_1$ à $C_6$.

**5.** Procédé selon l'une des revendications 1 à 4 caractérisé en ce que le solvant de dilution est choisi parmi les alcools ROH, les cétones

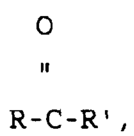

les esters

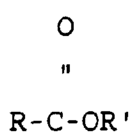

ou les céto-ester

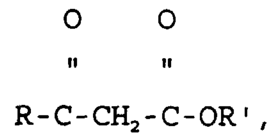

R et R' désignant chacun un radical monovalent.

**6.** Procédé selon l'une des revendications précédentes, caractérisé en ce que le catalyseur de gélification consiste en une solution aqueuse d'un acide, notamment HF,$H_2SO_4$,HCl, $HBF_4$, $HNO_3$,R-COOH, d'une base, par exemple NaOH,KOH,$NH_4OH$, les amines ou d'un sel notamment NaF,KF,$NH_4F$, R-COO-$NH_4$.

**7.** Procédé selon l'une des revendications précédentes caractérisé, en ce que la concentration en composé organométallique, comptée en métal, dans le mélange prêt à gélifier, est d'au moins 0,2 atome gramme/litre.

**8.** Procédé selon la revendication 7 caractérisé en ce que la concentration en composés organométalliques est comprise entre 0,8 et 2,5 atome gramme/ litre de l'élément métallique.

**9.** Procédé selon l'une des revendications précédentes caractérisé en ce que la concentration en catalyseur est supérieure à 0.01 mole/litre.

**10.** Procédé selon la revendication 9 caractérisé en ce que la concentration en catalyseurs est comprise entre 0,1 et 0,4 mole/litre.

**11.** Installation permettant la mise en oeuvre du procédé selon la revendication 1 comprenant trois bacs (10,12,14) destinés à contenir respectivement le précurseur à gélifier, le solvant de dilution et le catalyseur de gélification, le bac (10) destiné à contenir le précurseur à gélifier étant relié à un premier mélangeur statique (22), les bacs (12,14) destinés à contenir le solvant de dilution et le catalyseur de gélification étant reliés ensemble à un deuxième mélangeur statique (24), la sortie de ce deuxième mélangeur statique étant reliée à l'entrée du premier mélangeur statique (22).

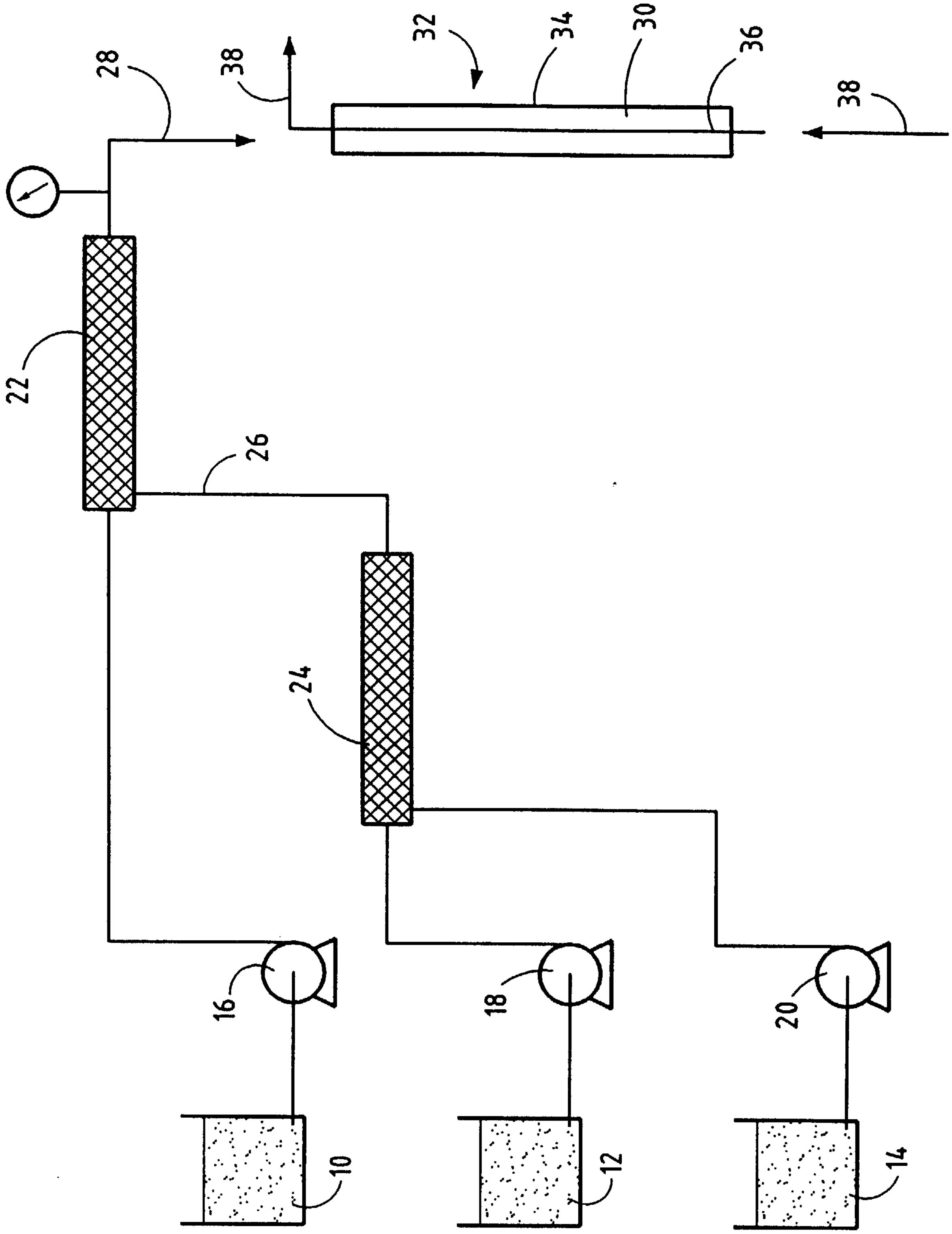
10
12
14
16
18
20
22
24
26
28
30
32
34
36
38
38

Office européen des brevets

# RAPPORT DE RECHERCHE EUROPEENNE

Numéro de la demande
EP 99 40 0165

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | FR 2 741 420 A (ELF AQUITAINE) 23 mai 1997<br>* page 3, ligne 34 - page 4, ligne 5 *<br>* page 5, ligne 26 - ligne 30 *<br>* page 12, ligne 22 - ligne 26 *<br>--- | 1-5 | B01J13/00<br>F16L59/02<br>E21B36/00<br>E21B37/06<br>E21B43/25 |
| A | EP 0 328 715 A (YAMAMOTO TOHRU)<br>23 août 1989<br>* revendications 1,3 *<br>--- | 1-3,5,6 | |
| A | EP 0 182 530 A (STC PLC) 28 mai 1986<br>* page 5, ligne 21 - ligne 23 *<br>* figure 2 *<br>----- | 1,11 | |

| DOMAINES TECHNIQUES RECHERCHES (Int.Cl.6) |
|---|
| B01J<br>F16L<br>E21B |

Le présent rapport a été établi pour toutes les revendications

| Lieu de la recherche | Date d'achèvement de la recherche | Examinateur |
|---|---|---|
| LA HAYE | 22 avril 1999 | Hilgenga, K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE RELATIF A LA DEMANDE DE BREVET EUROPEEN NO.** EP 99 40 0165

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

22-04-1999

| Document brevet cité au rapport de recherche | Date de publication | Membre(s) de la famille de brevet(s) | Date de publication |
|---|---|---|---|
| FR 2741420 A | 23-05-1997 | AT 175760 T | 15-01-1999 |
| | | BR 9605578 A | 18-08-1998 |
| | | CA 2190383 A | 17-05-1997 |
| | | DE 69601347 D | 25-02-1999 |
| | | EP 0774612 A | 21-05-1997 |
| | | NO 964831 A | 20-05-1997 |
| | | US 5858489 A | 12-01-1999 |
| EP 328715 A | 23-08-1989 | US 4937208 A | 26-06-1990 |
| EP 182530 A | 28-05-1986 | AU 4987785 A | 22-05-1986 |
| | | DK 530385 A | 17-05-1986 |
| | | FI 854421 A | 17-05-1986 |
| | | GB 2167084 A | 21-05-1986 |
| | | IN 164844 A | 10-06-1989 |
| | | JP 61126706 A | 14-06-1986 |

EPO FORM P0460

Pour tout renseignement concernant cette annexe : voir Journal Officiel de l'Office européen des brevets, No.12/82